# EUROPÄISCHE PATENTANMELDUNG

(11) **EP 4 574 714 A1**
(43) Veröffentlichungstag der Anmeldung: **25.06.2025**
(21) Anmeldenummer: 24213012.8
(22) Anmeldetag: 14.11.2024
(51) Int. Cl.: B65G 1/137

(54) **VORRICHTUNG UND VERFAHREN ZUM HALTEN EINES BEHÄLTERS SOWIE STATION UND LAGER- UND ENTNAHMESYSTEM MIT EINER DERARTIGEN VORRICHTUNG**

(30) Priorität: 18.12.2023 DE 102023212898
(71) Anmelder: Gebhardt Fördertechnik GmbH, D-74889 Sinsheim (DE)
(72) Erfinder: Weiß, David, 74918 Angelbachtal (DE); Knoop, Alexander, 74889 Sinsheim (DE); Gebhardt, Marco, 74889 Sinsheim (DE)
(74) Vertreter: Ullrich & Naumann PartG mbB

(57) **Zusammenfassung**

Eine Vorrichtung zum Halten eines Behälters (1), umfassend einen Behälterhalter (2) mit zwei voneinander beabstandeten Haltebereichen (3), um einen Behälter (1) in einem Zwischenraum (4) zwischen den Haltebereichen (3) zu halten, wobei jeder Haltebereich (3) mindestens ein in den Zwischenraum (4) ragendes und bewegbares Halteelement (5) mit einem Auflageelement (6) für eine Oberkante (7) des Behälters (1) oder eine horizontale und im Bereich der Oberkante (7) des Behälters (1) ausgebildete Rippe (8) des Behälters (1) aufweist, ist im Hinblick auf ein besonders sicheres Halten eines Behälters (1) mit konstruktiv einfachen Mitteln derart ausgestaltet und weitergebildet, dass jedes Halteelement (5) derart ausgebildet und angeordnet ist, dass es während eines nach unten gerichteten vertikalen Einführens des Behälters (1) in den Zwischenraum (4) - durch ein Zusammenwirken mit dem Behälter (1) - aus einer Halteposition aus dem Zwischenraum (4) heraus und nach Erreichen einer definierbaren Einführtiefe des Behälters (1) in den Zwischenraum (4) wieder in die Halteposition in den Zwischenraum (4) hinein bewegt wird, sodass die Oberkante (7) oder eine horizontale und im Bereich der Oberkante (7) des Behälters (1) ausgebildete Rippe (8) des Behälters (1) am Ende des Einführens des Behälters (1) in einer eingeführten Position des Behälters (1) auf den Auflageelementen (6) aufliegt. Des Weiteren sind eine Station zum Zugriff auf einen Behälter (1) und/oder auf Lagergut in einem Behälter (1) mit einer derartigen Vorrichtung sowie ein Lager- und Entnahmesystem mit einer Gitterstruktur mit einer Vielzahl von Gitterzellen, wobei jede Gitterzelle eine Lagersäule einer unterhalb der Gitterstruktur angeordneten Behälter-Lagerstruktur definiert und wobei die Lagersäulen eingerichtet sind, jeweils einen vertikalen Stapel von Behältern (1) aufzunehmen, und mit einer derartigen Station oder einer derartigen Vorrichtung angegeben. Schließlich ist ein entsprechendes Verfahren zum Halten eines Behälters (1) mit einer derartigen Vorrichtung angegeben.

## Beschreibung

Die Erfindung betrifft eine Vorrichtung zum Halten eines Behälters, umfassend einen Behälterhalter mit zwei voneinander beabstandeten Haltebereichen, um einen Behälter in einem Zwischenraum zwischen den Haltebereichen zu halten, wobei jeder Haltebereich mindestens ein in den Zwischenraum ragendes und bewegbares Halteelement mit einem Auflageelement für eine Oberkante des Behälters oder eine horizontale und im Bereich der Oberkante des Behälters ausgebildete Rippe des Behälters aufweist.

Des Weiteren betrifft die vorliegende Erfindung eine Station zum Zugriff auf einen Behälter und/oder auf Lagergut in einem Behälter, wobei die Station eine derartige Vorrichtung aufweist, und ein Lager- und Entnahmesystem mit einer Gitterstruktur mit einer Vielzahl von Gitterzellen, wobei jede Gitterzelle eine Lagersäule einer unterhalb der Gitterstruktur angeordneten Behälter-Lagerstruktur definiert und wobei die Lagersäulen eingerichtet sind, jeweils einen vertikalen Stapel von Behältern aufzunehmen, und mit einer derartigen Vorrichtung.

Weiterhin betrifft die vorliegende Erfindung ein Verfahren zum Halten eines Behälters mit einer Vorrichtung zum Halten eines Behälters, wobei die Vorrichtung einen Behälterhalter mit zwei voneinander beabstandeten Haltebereichen aufweist, um einen Behälter in einem Zwischenraum zwischen den Haltebereichen zu halten, wobei jeder Haltebereich mindestens ein in den Zwischenraum ragendes und bewegbares Halteelement mit einem Auflageelement für eine Oberkante des Behälters oder eine horizontale und im Bereich der Oberkante des Behälters ausgebildete Rippe des Behälters aufweist.

Aus der Praxis ist es bekannt, Behälter im Bereich von Kommissionierstationen auf den Behälterboden abzustellen und einem Kommissionierer anzudienen. Dies hat zur Folge, dass der Kommissionierer bei einer Behälterhöhe von beispielsweise 250mm genau so tief nach unten greifen muss, wie bei einem beispielsweise 450mm hohen Behälter, um einen Gegenstand oder ein Lagergut aus dem Behälter zu entnehmen. Dies wirkt sich negativ auf die Ergonomie des Arbeitsplatzes aus.

Daraus hat sich die Aufgabe ergeben, alle Behälter mit der Behälteroberkante auf der gleichen Höhe am Arbeitsplatz anzudienen. In diesem Fall muss der Kommissionierer nicht unnötig weit nach unten greifen und ein Greifer eines Bots oder eines Transportfahrzeugs für Behälter muss ebenfalls immer nur das gleiche Höhenniveau anfahren. Somit muss für einen solchen Vorgang der Greifer beispielsweise Regalsteher eines Blocklagers nicht verlassen und ist dadurch kontinuierlich geführt

Aus der EP 3 697 705 B1 ist gemäß den dortigen Fig. 5a und 5b eine Vorrichtung 2 zum Halten eines Behälters 30 bekannt, wobei die Vorrichtung einen Behälterhalter mit zwei voneinander beabstandeten Haltebereichen 4 aufweist, um einen Behälter 30 in einem Zwischenraum zwischen den Haltebereichen 4 zu halten, wobei jeder Haltebereich 4 ein in den Zwischenraum ragendes und bewegbares Halteelement 5 mit einem Auflageelement 12 für eine Oberkante 18 des Behälters 30 oder eine horizontale und im Bereich der Oberkante 18 des Behälters 30 ausgebildete Rippe 8 des Behälters aufweist.

Dabei weist das Halteelement 5 einen unteren mit dem Behälter 30 interagierenden Teil 9 auf, der mit dem Auflageelement 12 gekoppelt ist. Der untere Teil 9 ist über eine Schraubverbindung mit dem Auflageelement 12 gekoppelt und angeordnet, um während des Einführens des Behälters 30 in den Zwischenraum zwischen den Haltebereichen 4 in einer vertikalen Richtung nach unten mit dem Behälter 30 derart zu interagieren, dass das Halteelement 5 mit dem Auflageelement 12 in den Zwischenraum bewegt wird, um das Auflageelement 12 für den Behälter 30 bereitzustellen. Im Konkreten ist das Halteelement 5 am Haltebereich 4 schwenkbar gelagert, wobei sich das Auflageelement 12 vor dem Einführen des Behälters 30 in den Zwischenraum noch außerhalb des Zwischenraums befindet. Während des Einführens des Behälters 30 in den Zwischenraum wird das Auflageelement 12 - je nach erreichter Einführtiefe des Behälters 30 - über einen Kontakt mit dem unteren Teil 9 immer weiter in den Zwischenraum hereingeschwenkt, bis es am Ende des Einführens des Behälters 30 in seine Halteposition hineingeschwenkt ist. Ab diesem Moment kann der Behälter 30 mit seiner Rippe 8 auf dem Auflageelement 12 aufliegen.

Wird der Behälter 30 wieder aus dem Zwischenraum entnommen, so schwenkt das Auflageelement 12 aufgrund einer Federkraft wieder aus dem Zwischenraum heraus, sodass eine Entnahme des Behälters 30 aus dem Zwischenraum problemlos möglich ist.

Eine Vorrichtung der eingangs genannten Art kann beispielsweise bei einer Station eines Lager- und Entnahmesystems zum Zugriff auf einen Behälter oder auf in einem Behälter angeordnetes Lagergut eingesetzt werden, um auch unterschiedlich hohe Behälter gleicher Bauart immer auf einem definierten Höhenniveau zu halten. Dies vereinfacht den Zugriff durch Bedienpersonal im Vergleich mit auf dem Behälterboden abgestellten Behältern, da mithilfe einer derartigen Vorrichtung Bedienpersonal bei einer Behälterhöhe von beispielsweise 250 mm nicht genauso tief nach unten greifen muss wie bei einem 450 mm hohen Behälter.

Der vorliegenden Erfindung liegt die Aufgabe zugrunde, eine Vorrichtung sowie ein Verfahren zum Halten eines Behälters sowie eine Station mit einer derartigen Vorrichtung und ein Lager- und Entnahmesystem mit einer derartigen Station oder Vorrichtung anzugeben, wonach ein besonders sicheres Halten eines Behälters mit konstruktiv einfachen Mitteln ermöglicht ist.

Erfindungsgemäß wird die voranstehende Aufgabe durch eine Vorrichtung mit den Merkmalen des Anspruchs 1, durch eine Station mit einer derartigen Vorrichtung mit den Merkmalen des Anspruchs 13, durch ein Lager- und Entnahmesystem mit einer derartigen Station oder einer derartigen Vorrichtung mit den Merkmalen des Anspruchs 14 sowie durch ein Verfahren mit den Merkmalen des Anspruchs 15 gelöst.

Danach ist die Vorrichtung zum Halten eines Behälters gemäß Anspruch 1 derart ausgestaltet und weitergebildet, dass jedes Halteelement derart ausgebildet und angeordnet wird, dass es während eines nach unten gerichteten vertikalen Einführens des Behälters in den Zwischenraum - durch ein Zusammenwirken mit dem Behälter - aus einer Halteposition aus dem Zwischenraum heraus und nach Erreichen einer definierbaren Einführtiefe des Behälters in den Zwischenraum wieder in die Halteposition in den Zwischenraum hinein bewegt wird, sodass die Oberkante oder eine horizontale und im Bereich der Oberkante des Behälters ausgebildete Rippe des Behälters am Ende des Einführens des Behälters in eine eingeführte Position des Behälters auf den Auflageelementen aufliegt.

Des Weiteren ist danach das Verfahren zum Halten eines Behälters gemäß Anspruch 15 derart ausgestaltet und weitergebildet, dass jedes Halteelement derart ausgebildet und angeordnet wird, dass es während eines nach unten gerichteten vertikalen Einführens des Behälters in den Zwischenraum - durch ein Zusammenwirken mit dem Behälter - aus einer Halteposition aus dem Zwischenraum heraus und nach Erreichen einer definierbaren Einführtiefe des Behälters in den Zwischenraum wieder in die Halteposition in den Zwischenraum hinein bewegt wird, sodass die Oberkante oder eine horizontale und im Bereich der Oberkante des Behälters ausgebildete Rippe des Behälters am Ende des Einführens des Behälters in eine eingeführte Position des Behälters auf den Auflageelementen aufliegt.

In erfindungsgemäßer Weise ist zunächst erkannt worden, durch geschickte Ausgestaltung jedes Halteelements die voranstehende Aufgabe auf überraschend einfache Weise gelöst wird. In weiter erfindungsgemäßer Weise ist dann konkret erkannt worden, dass jedes Halteelement derart ausgebildet und angeordnet ist, dass es je nach Erfordernis und Betriebssituation entweder in den Zwischenraum hineinragt, um sich in seiner Halteposition, d. h. einer Position, in der es einen Behälter auf einem vorgebbaren Höhenniveau halten kann, zu befinden, oder aus dem Zwischenraum hinausbewegt ist, um ein Einführen des Behälters in den Zwischenraum zu ermöglichen. Dabei ist die Ausbildung und Anordnung jedes Halteelements derart realisiert, dass es beim Einführen des Behälters in den Zwischenraum aus dem Zwischenraum heraus und nach Erreichen einer definierbaren Einführtiefe des Behälters wieder in den Zwischenraum hinein bewegt wird, um wieder in seiner Halteposition zu sein, die ein Halten des Behälters ermöglicht. Wenn das Halteelement hinausbewegt ist, kann es vollständig aus dem Zwischenraum hinausbewegt sein oder zumindest in einem derartigen Umfang, dass ein Einführen des Behälters in den Zwischenraum problemlos möglich ist. Dabei erfolgt das Hinausbewegen jedes Halteelements durch ein Zusammenwirken mit dem Behälter. In der in den Zwischenraum eingeführten Position des Behälters liegt die Oberkante oder eine Rippe des Behälters auf den Auflageelementen auf, um ein sicheres und stabiles Halten des Behälters im Zwischenraum zu gewährleisten. Aufgrund der Tatsache, dass diese Auflage auf den Auflageelementen mit der Oberkante oder einer im Bereich der Oberkante des Behälters ausgebildeten Rippe des Behälters erfolgt, ist die Vorrichtung für die Verwendung unterschiedlich hoher Behälter geeignet, die in der eingeführten Position entsprechend ihrer Höhe unterschiedlich tief in den Zwischenraum hineinragen.

Bei der erfindungsgemäßen Vorrichtung befinden sich die Halteelemente auch dann in sicherer Weise in der Halteposition, wenn die Vorrichtung nicht benutzt wird oder sich kein Behälter im Zwischenraum befindet. Die Halteelemente befinden sich somit quasi standardmäßig in der Halteposition im Zwischenraum. Lediglich während des gesamten Vorgangs des Einführens des Behälters oder während eines zeitlichen Teilabschnitts des Vorgangs des Einführens des Behälters, also nicht während des gesamten Vorgangs des Einführens des Behälters, werden die Halteelemente aus dem Zwischenraum so weit hinaus bewegt, dass der Behälter problemlos in den Zwischenraum in seine eingeführte Position eingeführt werden kann. Der Behälter kann dabei die Halteelemente aus dem Zwischenraum quasi hinausdrücken.

Folglich sind mit der erfindungsgemäßen Vorrichtung, mit der erfindungsgemäßen Station, mit dem erfindungsgemäßen Lager- und Entnahmesystem und mit dem erfindungsgemäßen Verfahren eine Vorrichtung, eine Station, ein Lager- und Entnahmesystem und ein Verfahren bereitgestellt, wonach ein besonders sicheres Halten eines Behälters mit konstruktiv einfachen Mitteln ermöglicht ist.

Bei einem konkreten Ausführungsbeispiel kann jedes Halteelement derart ausgebildet und angeordnet sein, dass es während eines nach oben gerichteten vertikalen Anhebens des Behälters aus der eingeführten Position - durch ein Zusammenwirken mit dem Behälter - aus einer Halteposition aus dem Zwischenraum heraus und nach Erreichen einer definierbaren Anhebehöhe des Behälters wieder in die Halteposition in den Zwischenraum hinein bewegt wird. Um ein problemloses Entnehmen eines Behälters aus seiner eingeführten Position zu ermöglichen, kann jedes Halteelement derart ausgebildet und angeordnet sein, dass es auch bei einem Anheben des Behälters aus der eingeführten Position heraus aus dem Zwischenraum hinaus bewegt wird. Hierdurch ist eine besonders sichere und komfortable Nutzung der Vorrichtung ermöglicht.

Im Hinblick auf eine flexible Realisierungsmöglichkeit der Ausbildung und Anordnung der Halteelemente können die Halteelemente jeweils in einer translatorischen Bewegung oder in einer Schwenkbewegung aus dem Zwischenraum heraus und in den Zwischenraum hinein bewegbar sein. Zur Realisierung einer Schwenkbewegung kann ein Schwenklager oder eine Schwenkachse realisiert werden, um das oder um die das Halteelement schwenkbar ist. Je nach individuellen Erfordernissen kann eine entsprechend besonders geeignete Bewegungsart realisiert werden.

Hinsichtlich einer besonders sicheren Betriebsweise der Vorrichtung kann den Halteelementen jeweils ein elastisches Mittel zugeordnet sein, sodass die Halteelemente jeweils gegen das elastische Mittel aus ihrer Halteposition aus dem Zwischenraum heraus und mittels des elastischen Mittels in den Zwischenraum hinein bewegbar sind. Ein derartiges elastisches Mittel, beispielsweise eine Feder, ermöglicht auf besonders einfacher Weise, dass jedes Halteelement in seiner Ruheposition oder bei Nichtgebrauchen in seine Halteposition im Zwischenraum bewegt und stabilisiert ist.

Im Konkreten können die Halteelemente auf sichere Weise jeweils mittels des elastischen Mittels in Richtung Zwischenraum vorgespannt sein.

Weiterhin im Hinblick auf eine besonders sichere Betriebsweise und damit im Hinblick auf ein besonders sicheres Halten eines Behälters können die Halteelemente jeweils in einem Gehäuse verschiebbar oder verschwenkbar angeordnet sein. Bei einer verschwenkbaren Anordnung kann an oder in dem Gehäuse ein Schwenklager oder eine Schwenkachse ausgebildet sein, um das Halteelement sicher schwenkbar zu lagern. Durch ein Verschwenken des Halteelements kann das Halteelement beim Einführen eines Behälters in den Zwischenraum in das Gehäuse verschwenkt werden. Die Halteposition kann das verschwenkbare Halteelement in einem aus dem Gehäuse heraus geschwenkten Zustand erreichen. Ein derartiges Gehäuse bietet einerseits einen mechanischen Schutz gegen eine Beschädigung der Halteelemente durch andere bewegte Funktionselemente und andererseits einen Schutz gegen Verschmutzung einer Bewegungsmechanik der Halteelemente. Insoweit gewährleistet ein Gehäuse für die Halteelemente einen besonders sicheren Betrieb der Vorrichtung.

Bei einem konkreten Ausführungsbeispiel können die Halteelemente jeweils derart ausgebildet sein, dass das Zusammenwirken der Halteelemente mit dem Behälter über eine Berührung zwischen Behälter und jeweiligem Halteelement erfolgt. Dabei kann der Behälter die Halteelemente während des Vorgangs des Einführens oder während eines Abschnitts des Vorgangs des Einführens beginnend mit einer Berührung zwischen Behälter oder einer vertikalen Rippe des Behälters und Halteelement aus dem Zwischenraum zumindest soweit hinaus drücken, dass der Behälter problemlos und in der erforderlichen Weise in den Zwischenraum eingeführt werden kann. Je nach konkreter Realisierung und Anordnung der Halteelemente können die Halteelemente in einer translatorischen Bewegung oder in einer Schwenkbewegung mindestens teilweise aus dem Zwischenraum bewegt werden.

In besonders sicherer Weise können die Halteelemente jeweils ein Kontaktelement für die Berührung zwischen Behälter und Halteelement aufweisen, wobei das Kontaktelement in vertikaler Richtung oberhalb des Auflageelements ausgebildet ist. Ein derartiges Kontaktelement kann im Vergleich mit dem Halteelement besonders abriebfest ausgebildet sein, um eine häufige Nutzung und einen häufigen Kontakt mit einem Behälter weitestgehend schadlos zu überstehen. Dies gewährleistet einen lang andauernden sicheren Betrieb der Vorrichtung. Die Ausbildung des Kontaktelements in vertikaler Richtung oberhalb des Auflageelements ermöglicht einen möglichst frühzeitigen Kontakt des Behälters mit dem Kontaktelement beim Einführen des Behälters in den Zwischenraum. Dadurch wird ermöglicht, dass auch flache, nicht so tiefe Behälter mit der erfindungsgemäßen Vorrichtung verwendet werden können, da ein Behälter hierbei gleich zu Beginn des Einführens mit dem oberhalb des Auflageelements angeordneten Kontaktelement in Kontakt treten und die Halteelemente bewegen kann und hierfür nicht erst weit in den Zwischenraum eintauchen muss.

Bei einem weiteren konkreten Ausführungsbeispiel kann das Kontaktelement in Form eines Rastelements ausgebildet sein, sodass das Kontaktelement am Ende des Einführens des Behälters oberhalb der Oberkante des Behälters angeordnet ist. Ein solches Rastelement kann durch eine Beaufschlagung des Halteelements mit einer Federkraft in Richtung Inneres des Zwischenraums nach dem Einführvorgang des Behälters in den Zwischenraum und damit nach einem Kontakt des Kontaktelements mit dem Behälter in Richtung Inneres des Zwischenraums bewegt werden oder schnappen. Hierdurch ist eine Fixierung des Behälters gegen eine ungewünschte Bewegung des Behälters in vertikaler Richtung nach oben gewährleistet. Erst nach Überwinden eines durch die Federkraft vorgegebenen Widerstands kann der Behälter gegen den Widerstand und damit gegen die Federkraft aus dem Zwischenraum nach oben entnommen werden, wobei das Halteelement hierbei aus dem Zwischenraum heraus bewegt wird.

In weiter konkreter Weise kann das Auflageelement und das Kontaktelement am Halteelement derart voneinander beabstandet sein, dass die Oberkante des Behälters zwischen das Auflageelement und das Kontaktelement in eine zwischen dem Auflageelement und dem Kontaktelement gebildete Ausnehmung passt. Durch eine derartige Ausnehmung ist die Oberkante des Behälters in der eingeführten und gehaltenen Position des Behälters in besonders sicherer Weise im Zwischenraum positioniert und gehalten, da in dieser Position weder eine Bewegung nach oben noch eine Bewegung nach unten ohne entsprechenden Kraftaufwand möglich sind.

In konstruktiv besonders stabiler und einfacher Weise können die Halteelemente jeweils einstückig mit dem jeweiligen Auflageelement und dem jeweiligen Kontaktelement ausgebildet sein. Insoweit können das Auflageelement und das Kontaktelement integral mit dem Halteelement ausgebildet sein. Weiterhin können das Auflageelement und das Kontaktelement aus dem gleichen Material wie das Halteelement ausgebildet sein, beispielsweise aus Metall oder Kunststoff.

Im Hinblick auf ein problemloses Aufliegen des Behälters mit der Oberkante oder der horizontalen Rippe des Behälters auf dem Auflageelement kann das Auflageelement eine in Richtung Zwischenraum offene Aussparung oder Nut für eine vertikale Rippe des Behälters aufweisen. Eine vertikale Rippe, die beispielsweise mit dem Halteelement oder dem Kontaktelement beim Einführen des Behälters in den Zwischenraum in Kontakt war, kann während des Aufliegens des Behälters auf dem Auflageelement auf sichere Weise in der Aussparung oder Nut aufgenommen sein um das Aufliegen des Behälters nicht zu stören. Durch die Aussparung oder Nut ist eine Stabilisierung des Behälters in der eingeführten und gehaltenen Position erreicht, wenn der Behälter mit seiner vertikalen Rippe in der Aussparung oder Nut zur Anordnung kommt. Eine ungewünschte Bewegung des Behälters in einer horizontalen Ebene und senkrecht zur Aussparung oder Nut ist damit weitestgehend vermieden.

Ausführungsbeispiele der vorliegenden Erfindung können eine Behälterhalterung oder eine Vorrichtung zum Halten eines Behälters bereitstellen, um auch unterschiedlich hohe Behälter immer auf dem gleichen Höhenniveau an einem Arbeitsplatz anzudienen.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der erfindungsgemäßen Lehre anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer perspektivischen Darstellung ein Ausführungsbeispiel der erfindungsgemäßen Vorrichtung,
- Fig. 2: in einer perspektivischen Darstellung das Ausführungsbeispiel der erfindungsgemäßen Vorrichtung aus Fig. 1 mit einem in der Vorrichtung gehaltenen Behälter,
- Fig. 3: in einer perspektivischen Darstellung ein Halteelement des Ausführungsbeispiels aus Fig. 1,
- Fig. 4: in einer perspektivischen Darstellung ein in einem Gehäuse angeordnetes Halteelement des Ausführungsbeispiels aus Fig. 1,
- Fig. 5: in einer geschnittenen Seitenansicht das Gehäuse gemäß Fig. 4 mit dem darin angeordneten Halteelement,
- Fig. 6: in einer geschnittenen Seitenansicht das Ausführungsbeispiel der erfindungsgemäßen Vorrichtung aus Fig. 1 während des Einführens eines Behälters in die Vorrichtung,
- Fig. 7: in einer geschnittenen Seitenansicht das Ausführungsbeispiel der erfindungsgemäßen Vorrichtung aus Fig. 1 mit einem vollständig eingeführten Behälter und
- Fig. 8: in einer geschnittenen Darstellung das Ausführungsbeispiel der erfindungsgemäßen Vorrichtung aus Fig. 1 in einer Phase des Anhebens des Behälters aus der Vorrichtung.

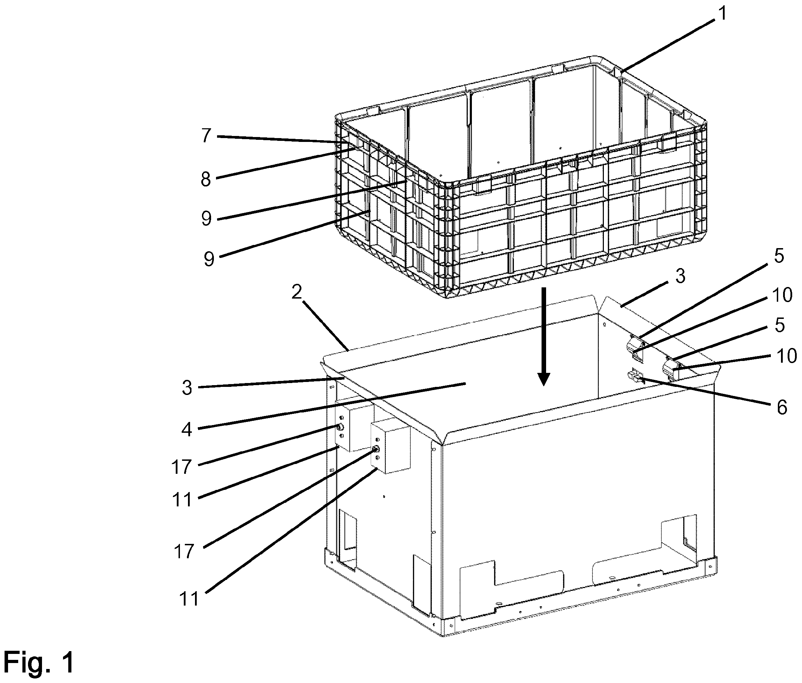

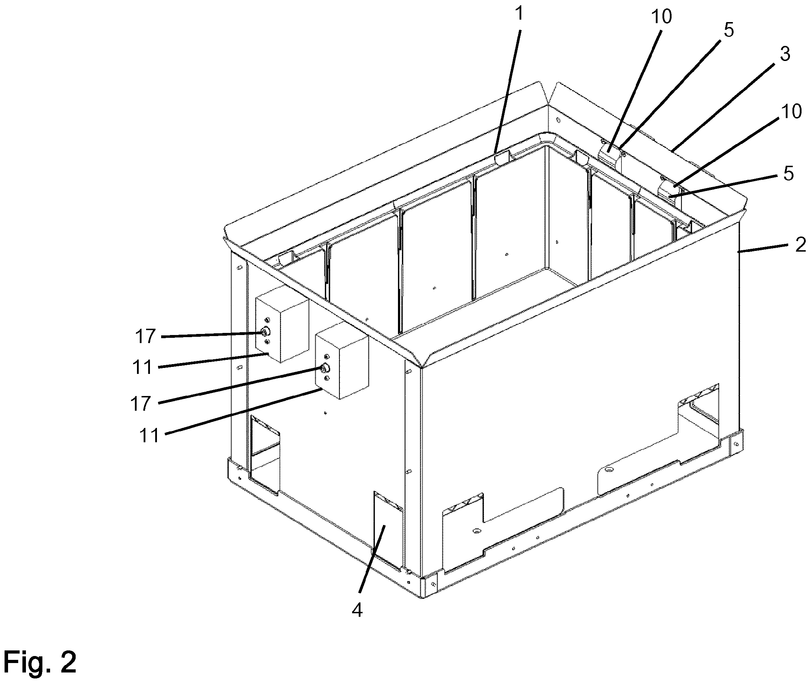

Fig. 1 zeigt in einer perspektivischen Darstellung ein Ausführungsbeispiel der erfindungsgemäßen Vorrichtung mit einem darüber befindlichen Behälter 1. Fig. 2 zeigt in einer perspektivischen Darstellung das Ausführungsbeispiel der erfindungsgemäßen Vorrichtung aus Fig. 1, wobei der Behälter 1 hier bereits in einen Behälterhalter 2 der Vorrichtung eingeführt ist und sich in einer eingeführten Position befindet.

Der Behälterhalter 2 umfasst zwei voneinander beabstandete Haltebereiche 3, wobei die Haltebereiche 3 bei diesem Ausführungsbeispiel in Form von jeweils einer vertikalen Seitenwand des Behälterhalters 2 ausgebildet sind. Der Behälterhalter 2 ist bei diesem Ausführungsbeispiel selbst behälterartig ausgebildet und weist neben den beiden vertikalen Seitenwänden noch zwei vertikale Längswände auf, die gemeinsam mit den vertikalen Seitenwänden einen Rahmen des Behälterhalters 2 bilden.

Zwischen den Haltebereichen 3 ist ein Zwischenraum 4 gebildet, um einen Behälter 1 in dem Zwischenraum 4 zu halten. Fig. 2 zeigt den Behälter 1 in dem Zwischenraum 4. Jeder Haltebereichen 3 weist zwei in den Zwischenraum 4 ragende und bewegbare Halteelemente 5 auf, die jeweils ein Auflageelement 6 für eine Oberkante 7 des Behälters 1 oder eine horizontale und im Bereich der Oberkante 7 des Behälters 1 ausgebildete Rippe 8 des Behälters 1 aufweisen. Jedes Halteelement 5 ist derart ausgebildet und angeordnet, dass es während eines nach unten gerichteten vertikalen Einführens des Behälters 1 in den Zwischenraum 4 - durch ein berührendes Zusammenwirken mit dem Behälter 1 - aus einer Halteposition aus dem Zwischenraum 4 heraus und nach Erreichen einer definierbaren Einführtiefe des Behälters 1 in den Zwischenraum 4 wieder in die Halteposition in den Zwischenraum 4 hinein bewegt wird. Fig. 1 zeigt die Halteelemente 5 in dieser in den Zwischenraum 4 hineinragenden Halteposition.

Neben der horizontalen Rippe 8 weist der Behälter 1 zusätzlich vertikale Rippen 9 auf, die außen an einer Seitenwand des Behälters 1 ausgebildet sind. Wird der Behälter 1 in den Zwischenraum 4 eingeführt, so gelangen zunächst die vertikalen Rippen 9 des Behälters 1 mit den Halteelementen 5 und ganz konkret mit jeweils einem Kontaktelement 10 eines jeden Halteelements 5 in Kontakt. Wird der Behälter 1 weiter in den Zwischenraum 4 eingeführt, so werden die Halteelemente 5 mit ihren jeweiligen Kontaktelementen 10 und Auflageelementen 6 aus ihrer Halteposition aus dem Zwischenraum 4 hinaus gedrückt, wobei sie translatorisch in horizontaler Richtung in ihre Gehäuse 11 bewegt werden.

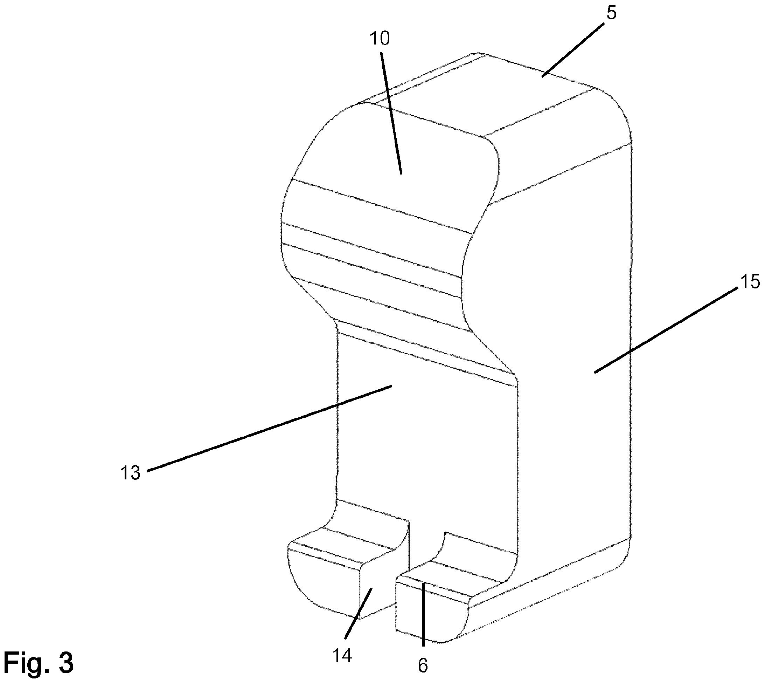

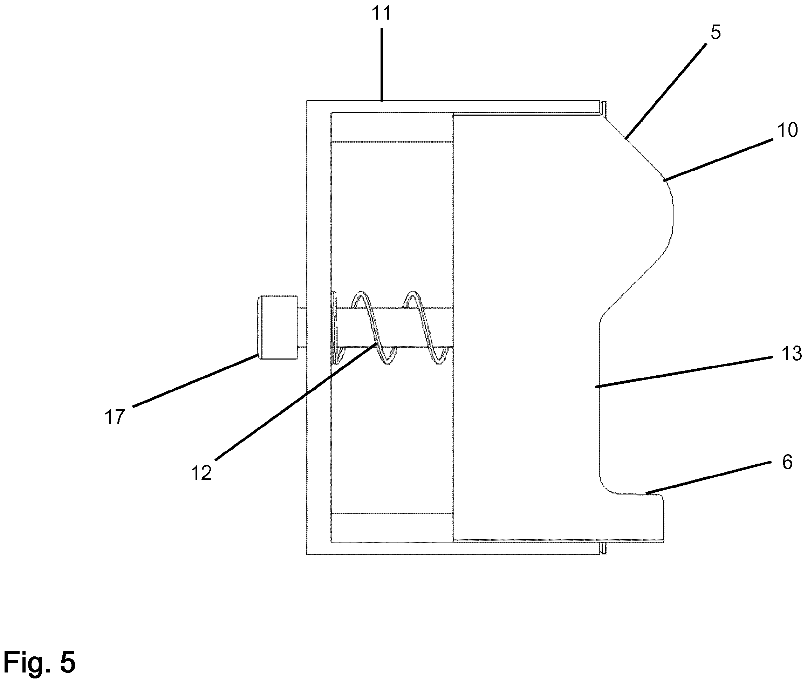

Die Fig. 3 bis 5 zeigen konkret jeweils ein Halteelement 5 und zwar jeweils in einer perspektivischen Darstellung ohne Gehäuse 11, in einer perspektivischen Darstellung in einem Gehäuse 11 und in einer geschnittenen Darstellung in einem Gehäuse 11. Die geschnittene Darstellung in Fig. 5 zeigt, dass jedem Halteelement 5 ein elastisches Mittel 12 in Form einer Feder zugeordnet ist, das das Halteelement 5 aus dem Gehäuse 11 in Richtung Zwischenraum 4 vorspannt.

Die Bewegung der Halteelemente 5 - mittels des Einführens des Behälters 1 - aus dem Zwischenraum 4 heraus findet demnach gegen die elastische Kraft des elastischen Mittels 12 statt. Kurz vor Erreichen der definierten Einführtiefe des Behälters 1 im Zwischenraum 4, d. h. in einer Phase des Einführens des Behälters 1, in der sich die Rippe 9 und das Kontaktelement 10 aus Ihrem Zustand der Berührung beginnen zu lösen und irgendwann nicht mehr berühren, wird das Kontaktelement 10 und damit das Halteelement 5 durch das elastische Mittel 12 wieder in seiner Halteposition in den Zwischenraum 4 hinein bewegt. Dabei wird das Kontaktelement 10 - in vertikaler Richtung gesehen - über die Oberkante 7 des Behälters 1 und das Auflageelement 6 unter die Oberkante 7 oder unter die horizontale Rippe 8 bewegt. Die Oberkante 7 des Behälters 1 und die horizontale Rippe 8 gelangen in dieser eingeführten Position des Behälters 1 in eine zwischen dem Kontaktelement 10 und dem Auflageelement 6 gebildeten Ausnehmung 13, wobei die horizontale Rippe 8 auf dem Auflageelement 6 aufliegt und durch dieses Auflageelement 6 sicher im Zwischenraum 4 gehalten wird. Das Kontaktelement 10 hat somit auch die Funktion eines Rastelements oder einer Rastnase. Bei dem hier gezeigten Ausführungsbeispiel liegt der Behälter 1 in seiner eingeführten Position auf insgesamt vier Auflageelementen 6.

In den Fig. 1, 3 und 4 ist gut erkennbar, dass jedes Auflageelement 6 eine in Richtung Zwischenraum 4 öffnende Aussparung 14 für eine vertikale Rippe 9 des Behälters 1 aufweist. Die beim Einführen des Behälters 1 in den Zwischenraum 4 anfangs mit dem Kontaktelement 10 in Berührung gelangende vertikale Rippe 9 gelangt am Ende des Einführens des Behälters 1 in diese Aussparung 14, und zwar dann, wenn das Halteelement 5 durch das elastische Mittel 12 wieder in seiner Halteposition in den Zwischenraum 4 bewegt wird. Ohne diese Aussparung 14 könnte das Halteelement 5 am Ende des Einführens des Behälters 1 nicht mehr in die Halteposition im Zwischenraum 4 bewegt werden, da die vertikale Rippe 9 dann mit dem Auflageelement 6 kollidieren würde, was die Bewegung des Halteelements 5 in den Zwischenraum verhindern würde.

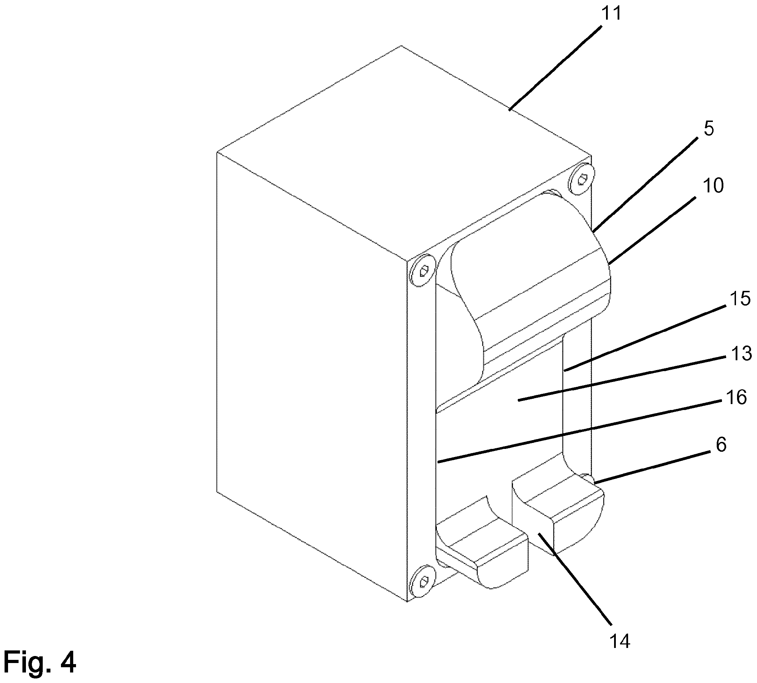

In den Fig. 3 und 4 ist besonders gut erkennbar, dass das Halteelement 5 zwei durch Seitenwände gebildete seitliche Führungsbereiche 15 aufweist, um an einer Innenwand 16 des Gehäuses 11 geführt zu sein, um eine sichere Bewegung eines Halteelements 5 in seinem jeweiligen Gehäuse 11 zu gewährleisten. Des Weiteren sind die Halteelemente 5 in ihren jeweiligen Gehäusen 11 mittels eines Bolzens 17, vorzugsweise Schraubbolzen, gelagert. Hier ist der Bolzen 17 durch einen Durchgang in der Rückwand des Gehäuses 11 gesteckt und in das Halteelement 5 hineingeschraubt. Das elastische Mittel 12 ist um den Bolzens 17 herum angeordnet und wirkt zwischen dem Gehäuse 11 und dem Halteelement 5. Hierdurch ist das Halteelement 5 gegen ein unbeabsichtigtes Hinausfallen aus dem Gehäuse 11 gesichert. Im eingebauten Zustand der Gehäuse 11 ist das Halteelement 5 durch das elastische Mittel 12 in Richtung Zwischenraum 4 und damit in seine Ausgangsposition und Halteposition vorgespannt.

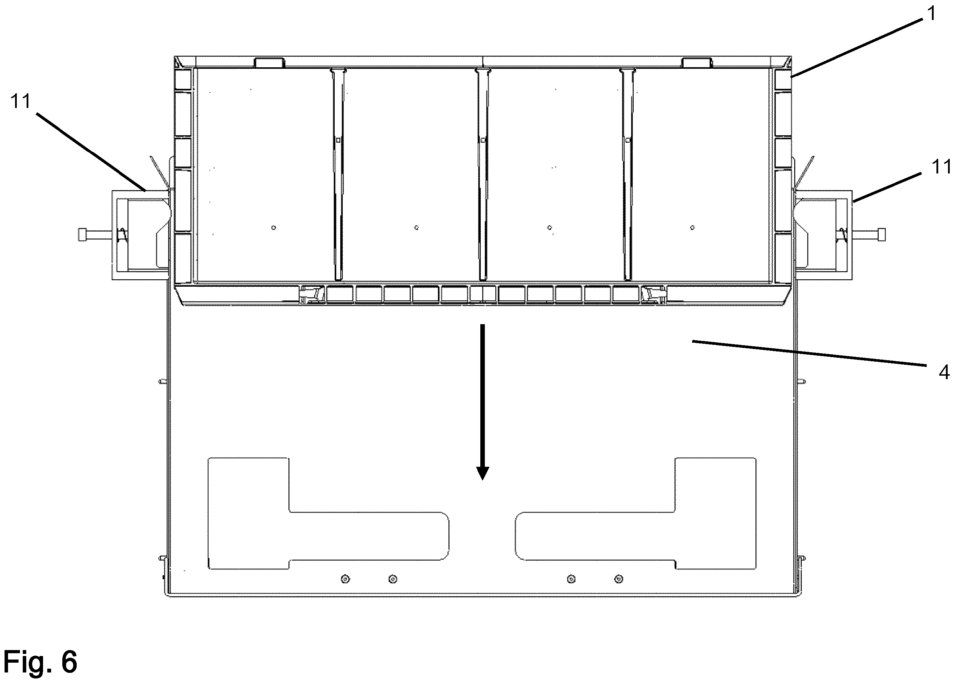

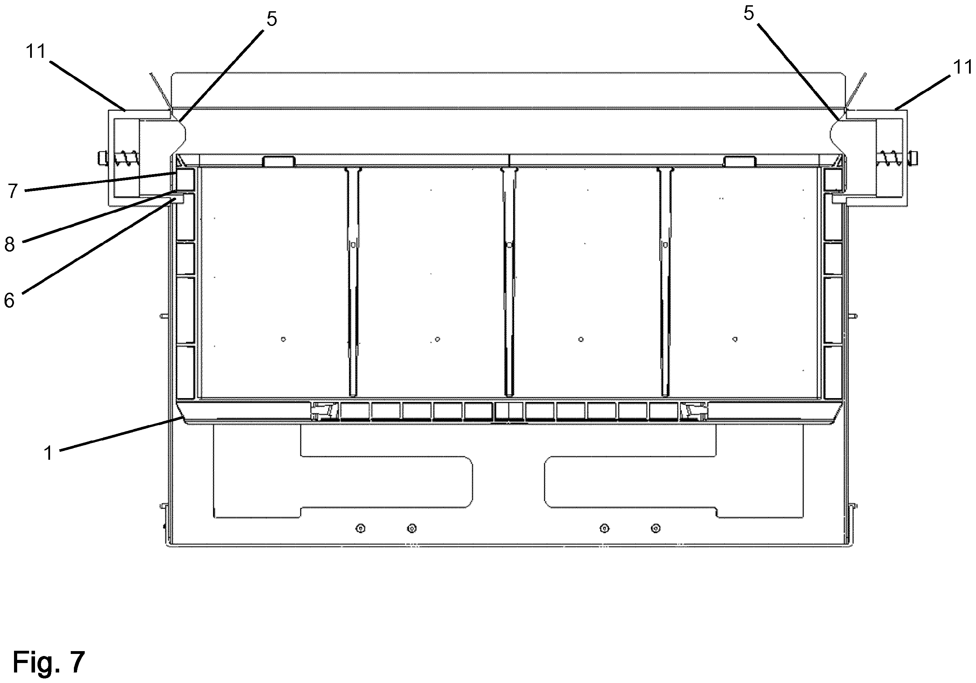

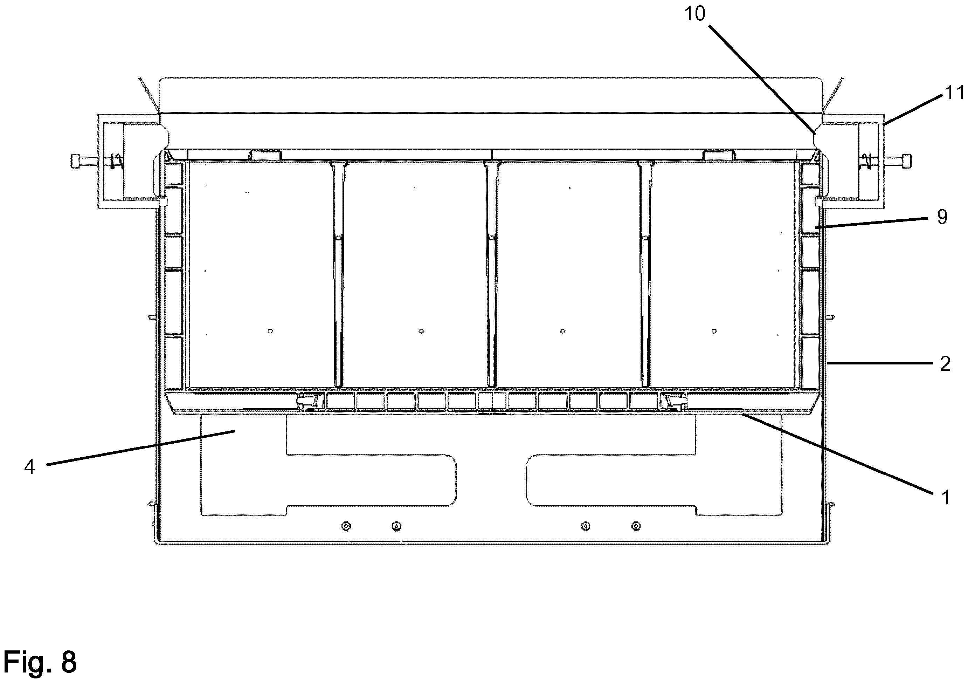

Die Fig. 6 bis 8 zeigen jeweils in einer geschnittenen Seitenansicht das Ausführungsbeispiel der erfindungsgemäßen Vorrichtung aus Fig. 1 in drei unterschiedlichen Betriebszuständen, nämlich gemäß Fig. 6 beim Einführen des Behälters 1 in den Zwischenraum 4, gemäß Fig. 7 bei in den Zwischenraum 4 eingeführtem Behälter 1 und gemäß Fig. 8 während des Anhebens des Behälters 1 aus dem Zwischenraum 4. Während der Behälter 1 in den Zwischenraum 4 eingeführt wird, wird das Halteelement 5 gegen das elastische Mittel 12 in sein jeweiliges Gehäuse 11 hineingeschoben. Der in Fig. 6 gezeigte Pfeil zeigt die vertikal nach unten verlaufende Bewegung des Behälters 1 an. Im in Fig. 7 gezeigten eingeführten Zustand des Behälters 1 ist das Halteelement 5 durch das elastische Mittel 12 wieder aus dem Gehäuse 11 hinaus gedrückt, um in seiner Halteposition zu sein. Dabei liegt die Oberkante 7 des Behälters 1 mit der horizontalen Rippe 8 auf dem Auflageelement 6 auf. Im in Fig. 8 gezeigten Betriebszustand wird der Behälter 1 wieder aus dem Zwischenraum 4 angehoben, wobei das Halteelement 5 mittels der Oberkante 7 und der vertikalen Rippen 9 des Behälters 1 über das Kontaktelement 10 wieder in sein Gehäuse 11 gegen das elastische Mittel 12 hineingedrückt wird. Somit kann der Behälter 1 auf einfache Weise wieder aus dem Zwischenraum 4 und damit aus der Vorrichtung und dem Behälterhalter 2 entnommen werden. Die Bewegung des Behälters 1 nach oben wird durch den in Fig. 8 gezeigten Pfeil angedeutet.

Das Kontaktelement 10 des hier gezeigten Ausführungsbeispiels weist eine abgerundete Querschnittsform auf. Insoweit ist die Oberfläche des Kontaktelements 10 mit einem vorgebbaren Radius und/oder mit einem mittigen flachen Bereich abgerundet. Die hierdurch gebildete Rundung ist in Richtung Zwischenraum 4 ausgerichtet. Alternativ hierzu kann das Kontaktelement 10 eine im Wesentlichen dreieckige Querschnittsform mit einer in Richtung Zwischenraum 4 gerichteten Kante aufweisen.

Grundsätzlich ist es bei Ausführungsbeispielen der erfindungsgemäßen Vorrichtung wesentlich, dass der Behälter 1 beim Einführen in den Zwischenraum 4 mit einem - in im Wesentlichen vertikaler Richtung gesehen - oberen Teil, nämlich mit dem Kontaktelement 10 oder einer Rastnase des bewegbaren Halteelements 5 zusammenwirkt. Im eingeführten Zustand interagiert der Behälter 1 dann mit einem unteren Teil, nämlich mit dem Auflageelement 6 für den Behälter 1.

Des Weiteren können bei Ausführungsbeispielen der erfindungsgemäßen Vorrichtung zwei Rippen 8 und 9 eines Behälters 1 genutzt, die bei allen Behältern 1 üblicherweise in gleicher Weise angeordnet sind. Die horizontal verlaufende Rippe 8 hat bei üblicherweise allen Behälterhöhen immer den gleichen Abstand von der Oberkante 7 oder der Oberseite des Behälters 1. Die vertikal verlaufende Rippe 9 befindet sich ebenfalls üblicherweise bei allen Behältern 1 an der gleichen Position. Da die horizontale Rippe 8 bei üblicherweise jeder Behälterhöhe den gleichen vertikalen Abstand von der Oberkante 7 oder der Oberseite des Behälters 1 aufweist, arretiert jeder Behälter 1 in der eingeführten Position mit seiner Oberkante 7 oder Oberseite auf der gleichen Höhe.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Behälter
- 2: Behälterhalter
- 3: Haltebereich
- 4: Zwischenraum
- 5: Halteelement
- 6: Auflageelement
- 7: Oberkante
- 8: horizontale Rippe
- 9: vertikale Rippe
- 10: Kontaktelement
- 11: Gehäuse
- 12: elastisches Mittel
- 13: Ausnehmung
- 14: Aussparung
- 15: Führungselement
- 16: Innenwand
- 17: Bolzen

## Patentansprüche

1. Vorrichtung zum Halten eines Behälters (1), umfassend einen Behälterhalter (2) mit zwei voneinander beabstandeten Haltebereichen (3), um einen Behälter (1) in einem Zwischenraum (4) zwischen den Haltebereichen (3) zu halten, wobei jeder Haltebereich (3) mindestens ein in den Zwischenraum (4) ragendes und bewegbares Halteelement (5) mit einem Auflageelement (6) für eine Oberkante (7) des Behälters (1) oder eine horizontale und im Bereich der Oberkante (7) des Behälters (1) ausgebildete Rippe (8) des Behälters (1) aufweist,
**dadurch gekennzeichnet, dass** jedes Halteelement (5) derart ausgebildet und angeordnet ist, dass es während eines nach unten gerichteten vertikalen Einführens des Behälters (1) in den Zwischenraum (4) - durch ein Zusammenwirken mit dem Behälter (1) - aus einer Halteposition aus dem Zwischenraum (4) heraus und nach Erreichen einer definierbaren Einführtiefe des Behälters (1) in den Zwischenraum (4) wieder in die Halteposition in den Zwischenraum (4) hinein bewegt wird, sodass die Oberkante (7) oder eine horizontale und im Bereich der Oberkante (7) des Behälters (1) ausgebildete Rippe (8) des Behälters (1) am Ende des Einführens des Behälters (1) in einer eingeführten Position des Behälters (1) auf den Auflageelementen (6) aufliegt.

2. Vorrichtung nach Anspruch 1, **dadurch gekennzeichnet, dass** jedes Halteelement (5) derart ausgebildet und angeordnet ist, dass es während eines nach oben gerichteten vertikalen Anhebens des Behälters (1) aus der eingeführten Position - durch ein Zusammenwirken mit dem Behälter (1) - aus einer Halteposition aus dem Zwischenraum (4) heraus und nach Erreichen einer definierbaren Anhebehöhe des Behälters (1) wieder in die Halteposition in den Zwischenraum (4) hinein bewegt wird.

3. Vorrichtung nach Anspruch 1 oder 2, **dadurch gekennzeichnet, dass** die Halteelemente (5) jeweils in einer translatorischen Bewegung oder in einer Schwenkbewegung aus dem Zwischenraum (4) heraus und in den Zwischenraum (4) hinein bewegbar sind.

4. Vorrichtung nach einem der Ansprüche 1 bis 3, **dadurch gekennzeichnet, dass** den Halteelementen (5) jeweils ein elastisches Mittel zugeordnet ist, sodass die Halteelemente (5) jeweils gegen das elastische Mittel aus ihrer Halteposition aus dem Zwischenraum (4) heraus und mittels des elastischen Mittels in den Zwischenraum (4) hinein bewegbar sind.

5. Vorrichtung nach Anspruch 4, **dadurch gekennzeichnet, dass** die Halteelemente (5) jeweils mittels des elastischen Mittels in Richtung Zwischenraum (4) vorgespannt sind.

6. Vorrichtung nach einem der Ansprüche 1 bis 5, **dadurch gekennzeichnet, dass** die Halteelemente (5) jeweils in einem Gehäuse (11) verschiebbar oder verschwenkbar angeordnet sind.

7. Vorrichtung nach einem der Ansprüche 1 bis 6, **dadurch gekennzeichnet, dass** die Halteelemente (5) jeweils derart ausgebildet sind, dass das Zusammenwirken der Halteelemente (5) mit dem Behälter (1) über eine Berührung zwischen Behälter (1) und jeweiligem Halteelement (5) erfolgt.

8. Vorrichtung nach Anspruch 7, **dadurch gekennzeichnet, dass** die Halteelemente (5) jeweils ein Kontaktelement (10) für die Berührung zwischen Behälter (1) und Halteelement (5) aufweisen, wobei das Kontaktelement (10) in vertikaler Richtung oberhalb des Auflageelements (6) ausgebildet ist.

9. Vorrichtung nach Anspruch 8, **dadurch gekennzeichnet, dass** das Kontaktelement (10) in Form eines Rastelements ausgebildet ist, sodass das Kontaktelement (10) am Ende des Einführens des Behälters (1) oberhalb der Oberkante (7) des Behälters (1) angeordnet ist.

10. Vorrichtung nach Anspruch 8 oder 9, **dadurch gekennzeichnet, dass** das Auflageelement (6) und das Kontaktelement (10) am Halteelement (5) derart voneinander beabstandet sind, dass die Oberkante (7) des Behälters (1) zwischen das Auflageelement (6) und das Kontaktelement (10) in eine zwischen dem Auflageelement (6) und dem Kontaktelement (10) gebildete Ausnehmung (13) passt.

11. Vorrichtung nach einem der Ansprüche 8 bis 10, **dadurch gekennzeichnet, dass** die Halteelemente (5) jeweils einstückig mit dem jeweiligen Auflageelement (6) und dem jeweiligen Kontaktelement (10) ausgebildet sind.

12. Vorrichtung nach einem der Ansprüche 1 bis 11, **dadurch gekennzeichnet, dass** das Auflageelement (6) eine in Richtung Zwischenraum (4) offene Aussparung (14) oder Nut für eine vertikale Rippe (9) des Behälters (1) aufweist.

13. Station zum Zugriff auf einen Behälter (1) und/oder auf Lagergut in einem Behälter (1), wobei die Station eine Vorrichtung nach einem der Ansprüche 1 bis 12 aufweist.

14. Lager- und Entnahmesystem mit einer Gitterstruktur mit einer Vielzahl von Gitterzellen, wobei jede Gitterzelle eine Lagersäule einer unterhalb der Gitterstruktur angeordneten Behälter-Lagerstruktur definiert und wobei die Lagersäulen eingerichtet sind, jeweils einen vertikalen Stapel von Behältern (1) aufzunehmen, und mit einer Vorrichtung nach einem der Ansprüche 1 bis 12 oder mit einer Station nach Anspruch 13.

15. Verfahren zum Halten eines Behälters (1) mit einer Vorrichtung zum Halten eines Behälters (1), insbesondere mit einer Vorrichtung zum Halten eines Behälters (1) nach einem der Ansprüche 1 bis 12, wobei die Vorrichtung einen Behälterhalter (2) mit zwei voneinander beabstandeten Haltebereichen (3) aufweist, um einen Behälter (1) in einem Zwischenraum (4) zwischen den Haltebereichen (3) zu halten, wobei jeder Haltebereich (3) mindestens ein in den Zwischenraum (4) ragendes und bewegbares Halteelement (5) mit einem Auflageelement (6) für eine Oberkante (7) des Behälters (1) oder eine horizontale und im Bereich der Oberkante (7) des Behälters (1) ausgebildete Rippe (8) des Behälters (1) aufweist,
**dadurch gekennzeichnet, dass** jedes Halteelement (5) derart ausgebildet und angeordnet wird, dass es während eines nach unten gerichteten vertikalen Einführens des Behälters (1) in den Zwischenraum (4) - durch ein Zusammenwirken mit dem Behälter (1) - aus einer Halteposition aus dem Zwischenraum (4) heraus und nach Erreichen einer definierbaren Einführtiefe des Behälters (1) in den Zwischenraum (4) wieder in die Halteposition in den Zwischenraum (4) hinein bewegt wird, sodass die Oberkante (7) oder eine horizontale und im Bereich der Oberkante (7) des Behälters (1) ausgebildete Rippe (8) des Behälters (1) am Ende des Einführens des Behälters (1) in eine eingeführte Position des Behälters (1) auf den Auflageelementen (6) aufliegt.

## Geänderte Patentansprüche

### Geänderte Patentansprüche gemäss Regel 137(2) EPÜ.

1. Vorrichtung zum Halten eines Behälters (1), umfassend einen Behälterhalter (2) mit zwei voneinander beabstandeten Haltebereichen (3), um einen Behälter (1) in einem Zwischenraum (4) zwischen den Haltebereichen (3) zu halten, wobei jeder Haltebereich (3) mindestens ein in den Zwischenraum (4) ragendes und bewegbares Halteelement (5) mit einem Auflageelement (6) für eine Oberkante (7) des Behälters (1) oder eine horizontale und im Bereich der Oberkante (7) des Behälters (1) ausgebildete Rippe (8) des Behälters (1) aufweist,
**dadurch gekennzeichnet, dass** jedes Halteelement (5) derart ausgebildet und angeordnet ist, dass es während eines nach unten gerichteten vertikalen Einführens des Behälters (1) in den Zwischenraum (4) - durch ein Zusammenwirken mit dem Behälter (1) - aus einer Halteposition aus dem Zwischenraum (4) heraus und nach Erreichen einer definierbaren Einführtiefe des Behälters (1) in den Zwischenraum (4) wieder in die Halteposition in den Zwischenraum (4) hinein bewegt wird, sodass die Oberkante (7) oder eine horizontale und im Bereich der Oberkante (7) des Behälters (1) ausgebildete Rippe (8) des Behälters (1) am Ende des Einführens des Behälters (1) in einer eingeführten Position des Behälters (1) auf den Auflageelementen (6) aufliegt.

2. Vorrichtung nach Anspruch 1, **dadurch gekennzeichnet, dass** jedes Halteelement (5) derart ausgebildet und angeordnet ist, dass es während eines nach oben gerichteten vertikalen Anhebens des Behälters (1) aus der eingeführten Position - durch ein Zusammenwirken mit dem Behälter (1) - aus einer Halteposition aus dem Zwischenraum (4) heraus und nach Erreichen einer definierbaren Anhebehöhe des Behälters (1) wieder in die Halteposition in den Zwischenraum (4) hinein bewegt wird.

3. Vorrichtung nach Anspruch 1 oder 2, **dadurch gekennzeichnet, dass** die Halteelemente (5) jeweils in einer translatorischen Bewegung oder in einer Schwenkbewegung aus dem Zwischenraum (4) heraus und in den Zwischenraum (4) hinein bewegbar sind.

4. Vorrichtung nach einem der Ansprüche 1 bis 3, **dadurch gekennzeichnet, dass** den Halteelementen (5) jeweils ein elastisches Mittel zugeordnet ist, sodass die Halteelemente (5) jeweils gegen das elastische Mittel aus ihrer Halteposition aus dem Zwischenraum (4) heraus und mittels des elastischen Mittels in den Zwischenraum (4) hinein bewegbar sind.

5. Vorrichtung nach Anspruch 4, **dadurch gekennzeichnet, dass** die Halteelemente (5) jeweils mittels des elastischen Mittels in Richtung Zwischenraum (4) vorgespannt sind.

6. Vorrichtung nach einem der Ansprüche 1 bis 5, **dadurch gekennzeichnet, dass** die Halteelemente (5) jeweils in einem Gehäuse (11) verschiebbar oder verschwenkbar angeordnet sind.

7. Vorrichtung nach einem der Ansprüche 1 bis 6, **dadurch gekennzeichnet, dass** die Halteelemente (5) jeweils derart ausgebildet sind, dass das Zusammenwirken der Halteelemente (5) mit dem Behälter (1) über eine Berührung zwischen Behälter (1) und jeweiligem Halteelement (5) erfolgt.

8. Vorrichtung nach Anspruch 7, **dadurch gekennzeichnet, dass** die Halteelemente (5) jeweils ein Kontaktelement (10) für die Berührung zwischen Behälter (1) und Halteelement (5) aufweisen, wobei das Kontaktelement (10) in vertikaler Richtung oberhalb des Auflageelements (6) ausgebildet ist.

9. Vorrichtung nach Anspruch 8, **dadurch gekennzeichnet, dass** das Kontaktelement (10) in Form eines Rastelements ausgebildet ist, sodass das Kontaktelement (10) am Ende des Einführens des Behälters (1) oberhalb der Oberkante (7) des Behälters (1) angeordnet ist.

10. Vorrichtung nach Anspruch 8 oder 9, **dadurch gekennzeichnet, dass** das Auflageelement (6) und das Kontaktelement (10) am Halteelement (5) derart voneinander beabstandet sind, dass die Oberkante (7) des Behälters (1) zwischen das Auflageelement (6) und das Kontaktelement (10) in eine zwischen dem Auflageelement (6) und dem Kontaktelement (10) gebildete Ausnehmung (13) passt.

11. Vorrichtung nach einem der Ansprüche 8 bis 10, **dadurch gekennzeichnet, dass** die Halteelemente (5) jeweils einstückig mit dem jeweiligen Auflageelement (6) und dem jeweiligen Kontaktelement (10) ausgebildet sind.

12. Vorrichtung nach einem der Ansprüche 1 bis 11, **dadurch gekennzeichnet, dass** das Auflageelement (6) eine in Richtung Zwischenraum (4) offene Aussparung (14) oder Nut für eine vertikale Rippe (9) des Behälters (1) aufweist.

13. Station zum Zugriff auf einen Behälter (1) und/oder auf Lagergut in einem Behälter (1), wobei die Station eine Vorrichtung nach einem der Ansprüche 1 bis 12 aufweist.

14. Lager- und Entnahmesystem mit einer Gitterstruktur mit einer Vielzahl von Gitterzellen, wobei jede Gitterzelle eine Lagersäule einer unterhalb der Gitterstruktur angeordneten Behälter-Lagerstruktur definiert und wobei die Lagersäulen eingerichtet sind, jeweils einen vertikalen Stapel von Behältern (1) aufzunehmen, und mit einer Vorrichtung nach einem der Ansprüche 1 bis 12 oder mit einer Station nach Anspruch 13.
